# EUROPÄISCHE PATENTSCHRIFT

(11) **EP 1 702 892 B1**
(45) Veröffentlichungstag und Bekanntmachung des Hinweises auf die Patenterteilung: **10.04.2019**
(21) Anmeldenummer: 06004012.8
(22) Anmeldetag: 28.02.2006
(51) Int. Cl.: C02F 5/12

(54) **Verfahren zur Wasserkonditionierung**
Process for the conditioning of water
Procédé de conditionnement de l'eau

(30) Priorität: 10.03.2005 DE 102005010855
(43) Veröffentlichungstag der Anmeldung: 20.09.2006
(73) Patentinhaber: LANXESS Deutschland GmbH, 50569 Köln (DE)
(72) Erfinder: Klein, Thomas, Dr., 50678 Köln (DE); Ebert, Fred, 51373 Leverkusen (DE); Moritz, Ralf-Johann, Dr., 41469 Neuss (DE)

(56) Entgegenhaltungen:
- EP-A- 1 464 627
- DE-A1- 10 101 671
- DE-A1- 10 310 414
- DE-A1- 19 603 052
- US-A- 5 942 150
- US-A1- 2002 125 199

## Beschreibung

Die Erfindung betrifft ein neues Wasserkonditionierungsmittel auf Basis von Polysuccinimid (PSI) und Bindemitteln zur Herstellung von Komprimaten zur gleichzeitigen Verhinderung von Ablagerungen sowie mikrobiologischen Belägen aufgrund einer mikrobiellen Belastung der zu konditionierenden Gewässer, insbesondere in und an Bauwerken und Bauwerksentwässerungssystemen. Unter Bauwerken im Sinne der vorliegenden Erfindung versteht man Bauwerke des Hoch- und Tiefbaus, insbesondere Infrastrukturanlagen wie z.B. Gebäude, Schwimmbäder, Tunnelbauten, Stollen, Kavernen, Staumauern, Talsperren, Wasserkraftbauten, Erddämme, Stützmauern, Straßenbauten, Hangentwässerungsanlagen, Quellfassungen oder provisorische Baugruben. Weiterhin werden im Sinne der vorliegenden Erfindung unter Bauwerken offene Infrastrukturanlagen wie etwa Deponien (für kommunale oder gewerbliche Abfälle) verstanden einschließlich das diese durchziehende Entwässerungssystem, sowie Brücken und deren Entwässerungssysteme. Weiterhin kann PSI in den erfindungsgemäßen Konditionierungsmitteln in der Erdölförderung eingesetzt werden, bevorzugt bei Squeeze-Operationen. Unter Konditionierungsmittel auf Basis von PSI versteht man im Sinne der vorliegenden Erfindung PSI selber, dessen Copolymere sowie Hydrolysate, oder dessen Teilhydrolysate, wie sie beispielsweise aus der Umsetzung von PSI mit Wasser allein oder mit Polyasparaginsäure-Natriumsalz gemäß WO 98/47964 erhalten werden.

Bei der Entwässerung von Bauwerken fallen Grund- und Sickerwässer oder Fließwässer an, die einen unterschiedlich hohen Gehalt an gelösten Wasserinhaltsstoffen aufweisen. Einerseits sind dies anorganische Wasserinhaltsstoffe die oft harte und kompakte Ablagerungen verursachen. Beim Eintritt der Grund- und Sickerwässer in die Entwässerungssysteme verändern sich die physikalischen Bedingungen, und die ursprünglich gelösten Wasserinhaltsstoffe bilden harte, festhaftende Ablagerungen, welche in amorpher oder kristalliner Form vorliegen können. Diese Ablagerungen (Versinterungen) bestehen üblicherweise aus Calciumcarbonat, Magnesiumcarbonat, Calciumsulfat (Gips), Silikaten (SiO₂), Bariumsulfat und Eisenoxiden, alle gegebenenfalls in ihrer hydratisierten Form.

Diese harten, festhaftenden Ablagerungen verkleinern den Abflussquerschnitt oder schließen ihn in Extremfällen ganz ein. In der Folge können die anfallenden Wassermengen nicht mehr frei abfließen, und es bilden sich Rückstaus, die große Schäden in Entwässerungssystemen und an den zu entwässernden Bauwerken verursachen können.

Im Bereich der Schwimmbäder ist das Inhaltswasser derart zu konditionieren, dass es nicht zu Ablagerungen an den Beckenwänden oder in Pumpen und Filtern kommt. Im Bereich der Erdölförderung bietet PSI aufgrund seiner höheren Thermostabilität Vorteile gegenüber Konditionierungsmitteln auf Basis Polyasparaginsäuren.

Andererseits können Ablagerungen aber auch aus einem festen Bewuchs aus Mikroben bestehen, die sich im Wassersystem befinden und die im Wasser sowie in den Komprimaten oder deren Abbauprodukten günstige Nahrungsgrundlagen finden.

Aus WO 94/19288 ist ein Verfahren zur Verhinderung von härtebedingten Ablagerungen in einem Bauwerksentwässerungssystem bekannt, das dadurch gekennzeichnet ist, dass dem abzuführenden Sicker- oder Grundwasser ein Konditionierungsmittel zugegeben wird, das ein Stabilisierungsmittel für Härtebildner und ein Dispergiermittel enthält.

Dabei kommen als Konditionierungsmittel unter anderem Maleinsäureanhydrid-Polymere und Copolymere zum Einsatz.

Aus CH 694 022 A5 ist der Einsatz von PSI in Kalkschutzsteinen zur Minimierung der Bildung von Ablagerungen in Bauwerksentwässerungssystemen bekannt.

Aus WO 02/16 731 ist ein Wasserkonditionierungsmittel zur Belagsverhinderung in Bauwerksentwässerungssystemen auf Basis von Polysuccinimid und Fettsäuren als Bindemittel bekannt.

Gerade die Kombination von PSI mit Fettsäuren hat gegenüber dem Einsatz von PSI alleine den Vorteil der Verwendung eines ökologischen Konditionierungsmittels (Polyasparaginsäure) und die Vermeidung der technischen Probleme (Schnellöslichkeit), die mit der Verwendung der freien Polyasparaginsäure verbunden sind. Nachteilig an den im Stand der Technik aufgeführten Konditionierungsmitteln ist der zumeist zusätzliche notwendige Einsatz von Bioziden oder Konservierungsmitteln um einen mikrobiellen Bewuchs innerhalb der zu konditionierenden Wassersysteme zu vermeiden.

Jüngste Versuche zeigen, dass eine nicht mit Konservierungsmittel ausgerüstete Formulierung unter speziellen Bedingungen, wie etwa langsame Fließgeschwindigkeit des Wassers und gleichzeitige Anwesenheit von Mikroben, ihre Wirksamkeit durch mikrobiellen Befall der Polysuccinimid enthaltenden Komprimate verlieren kann. (Maidl et al. "Untersuchung der Eignung von Härtestabilisatoren in Tunneldränagen", Tunnelbautaschenbuch 2004, S. 337 ff). Um dies zu vermeiden, wird bei diesen speziellen Bedingungen der Einsatz von Konservierungsmitteln wie Sorbinsäure, o-Phenylphenol oder Parabenen notwendig.

Wirkstoffe wie etwa Phenole oder Parabene sind allerdings trotz ihrer biologischen Abbaubarkeit nicht immer erwünscht. So können Gewässerorganismen in einem dem Bauwerk, beispielsweise Tunnel, benachbarten Gewässer die Wirkstoffe in ihrem Fettgewebe anreichern. Dies ergibt sich aus dem Verteilungskoeffizient Oktanol/Wasser (pOW), der die Anreicherung eines in Wasser gelösten Wirkstoffs in Oktanol wiedergibt. Für sich nicht im Fettgewebe anreichernde Stoffe ergibt sich die Anforderung, dass der log pOW möglichst negativ sein soll.

Andere Wirkstoffe wie die Sorbinsäure reichern sich zwar aufgrund ihrer guten Wasserlöslichkeit nicht im Fettgewebe an, jedoch sind sie nur im sauren Milieu wirksam. Gerade aber in Bauwerken wie beispielsweise Tunnelbauten ist das Dränagenwasser jedoch durch Auslaugung von alkalischen Mörtelbestandteilen so alkalisch, dass darin wenig wirksames Sorbat vorliegt.

Es bestand daher die Aufgabe, nach Bindemitteln für Polysuccinimid enthaltende Komprimate zu suchen, die den Einsatz zusätzlicher Biozide und Konservierungsmittel überflüssig machen gleichzeitig aber eine gleichmäßige Freisetzung des PSI zulassen und somit Kalkablagerungen, insbesondere von Calciumcarbonat, verhindern.

Es wurde gefunden, dass im Prinzip eine Reihe von Bindemitteln die Aufgabe erfüllen und zwar Cellulose und/oder Cellulosederivate, bevorzugt Methylcellulose, Carboxymethylcellulose, Hydroxymethylcellulose, Stärke und/oder Stärkederivate, Lactose, Dextrose, Polyvinylpyrrolidon (PVP), Polyethylenglykole, ethoxyliertes Castoröl, Polyethylenglykol-15-hydroxystearat, Fettsäurederivatge, bevorzugt Fettsäureester und Fettsäureamide. Diese eignen sich nicht nur als gutes Bindemittel, sondern vermeiden auch die Entstehung des Befalls durch spezielle Mikroorganismen, wie etwa Pilze. Überraschenderweise zeigten aber Mischungen von PSI mit Fettsäureamiden die beste Wirkung in verkeimtem Wasser.

Die Lösung der Aufgabe und damit Gegenstand der vorliegenden Erfindung ist ein Konditionierungsmittel zur Konditionierung von Wassersystemen bevorzugt stehenden und fließenden Wassersystemen, dadurch gekennzeichnet, dass diese einen wirksamen Gehalt an Polysuccinimid (PSI) oder dessen Teilhydrolysat in Kombination mit Fettsäureamiden enthalten, sowie ein Verfahren zur Verhinderung von Ablagerungen in und an Bauwerken und Bauwerksentwässerungssysteme, das dadurch gekennzeichnet ist, dass dem zu behandelnden Fließwasser ein Konditionierungsmittel auf Basis von Polysuccinimid in Kombination mit Fettsäureamiden zugegeben wird.

Durch die Zugabe des erfindungsgemäßen Konditionierungsmittels auf Basis von PSI/Fettsäureamiden, zu dem zu behandelnden Wasser kann das Aufwachsen der Kristallkeime wirkungsvoll verhindert werden. Gleichzeitig wird die Bildung von harten Ablagerungen unmöglich sowie die bei Nutzung von freien Fettsäuren auftretenden Kalkseifen, die als kolloidale Matrix des Wachstum von Mikroorganismen begünstigen, vermieden.

Konditionierungsmittel für wässrige Systeme werden auf Grund ihrer Wirkungsweise verschieden bezeichnet, z.B. als Dispergiermittel, Härtestabilisatoren, Schutzkolloide und Kristallwachstumsdesaktivatoren. Dazu gehören auch Sequestrierungsmittel (Komplexierungsmittel) und weitere grenzflächenaktive Stoffe (Tenside), gegebenenfalls auch Biozide. Wichtig sind insbesondere Härtestabilisatoren, d.h. Verbindungen, die zur Stabilisierung der Härtebildner in Entwässerungssystemen geeignet sind und dabei das Kristallwachstum desaktivieren und meist auch grenzflächenaktive Eigenschaften aufweisen, und Dispergatoren (Dispergiermittel). Dispergiermittel sind grenzflächenaktive Verbindungen, die ungelöste Feststoffteilchen im Wasser - auch im kolloidalen Bereich - dispergieren, d.h. fein verteilt halten. Erfindungsgemäße Konditionierungsmittel auf Basis von PSI und Fettsäureamiden werden dem Wassersystem in Abhängigkeit vom jeweiligen Anwendungsbereich zugegeben.

So erfordern die Explorationsprozesse von Erdölen oder Erdgasen, insbesondere die Squeeze-Operationen, deutlich höhere Mengen PSI, als der Einsatz in stehenden Wassersystemen, wie beispielsweise Schwimmbädern. PSI wird deshalb dem zu konditionierenden, bevorzugt dem stehenden oder fließenden Wassersystem, bevorzugt in wässriger Lösung, in Mengen von 0,1 bis 10000 g/m³, insbesondere 0,5 bis 5000 g/m³ des zu konditionierenden Wassersystems, zugegeben. PSI kommt dabei in Kombination mit den oben genannten Hilfsstoffen, bevorzugt Fettsäurederivate und gegebenenfalls mit weiteren Konditionierungsmitteln zur Anwendung.

Härtestabilisatoren und Dispergatoren überschneiden sich oft in ihrer Wirkung. Daher werden Konditionierungsmittel, bevorzugt auch Kombinationen mit Härtestabilisatoren oder Dispergatoren eingesetzt, wobei sich in der Regel ein höherer Wirkungsgrad gegenüber dem getrennten Einsatz ergibt. Konditionierungsmittel können auch noch weitere geeignete Zusätze enthalten, wobei aber immer für die Behandlung des abzuführenden Sicker- oder Grundwassers entscheidend sein muss, dass durch den Einsatz eines spezifischen Konditionierungsmittels bzw. Konditionierungsmittelgemisches eine umweltgerechte Verhinderung von Versinterungen erreicht wird.

Das als eine wesentliche Komponente im erfindungsgemäßen Konditionierungsmittel einzusetzende PSI, dessen Copolymere, und dessen Teilhydrolysate zeigen eine sehr günstige Wirkungskorrelation von Dispergier- und Härtestabilisatoreigenschaften und werden in Verbindung mit einem slow-release-Effekt, d.h. allmählicher Freisetzung des Wirkstoffs Polyasparaginsäure, zur Konditionierung stehender und fließender Wassersysteme, insbesondere der Bauwerksentwässerung, insbesondere der Tunnelentwässerung und in der Erdölexploration eingesetzt. PSI, dessen Copolymere sowie dessen Teilhydrolysate, ist daher besonders geeignet zur Verhinderung von Ablagerungen, insbesondere von Calciumcarbonat, Magnesiumcarbonat, Calciumsulfat, Silikaten, Bariumsulfat oder Eisenoxiden. Darüber hinaus zeigt PSI zur folgende Vorteile:
- PSI ist nicht hygroskopisch und lässt sich mit geringem Bindemittelanteil von beispielsweise ≤ 10 % zu formstabilen Depotsteinen verpressen.
- PSI zeigt als Imid einen auf das Gewicht bezogenen höheren Wirkstoffanteil als das natriumhaltige Natriumpolyaspartat.
- PSI löst sich langsam auf, wobei die Auflösegeschwindigkeit mit dem pH ansteigt; es zeigt daher die gewünschte slow-release Eigenschaft.
- PSI zeigt aufgrund seiner geringen Löslichkeit ein gegenüber Polyasparaginsäure verlangsamtes Abbauverhalten mit entsprechend reduziertem Potential zu Biofouling.
- PSI ist aufgrund seiner Säure freisetzenden Eigenschaft in der Lage, Kalkablagerungen zurückzubilden und abzulösen. Im Gegensatz zu den leichtlöslichen organischen Säuren wird durch das unlösliche PSI ein Verbleiben des Wirkstoff-Precursors am Ort der Versinterung gewährleistet.

PSI erhält man durch thermische Polymerisation von Maleinsäureanhydrid und Ammoniak oder deren Derivate (siehe US-A 3,846,380; US-A 4,839,461; US-A 5,219,952 oder US-A 5,371,180). Darüber hinaus erhält man PSI durch thermische Polymerisation von Asparaginsäure (US-A 5,051,401) gegebenenfalls in Gegenwart saurer Katalysatoren/Lösungsmittel (US-A 3,052,565). PSI fällt bei der chemischen Synthese als Polymer mit einem mittleren Molgewicht von 500 bis 20.000, bevorzugt 3.000 bis 5.000, an. Polysuccinimid ist als chemischer Vorläufer der Polyasparaginsäure zu betrachten, zu der es mit Wasser langsam hydrolysiert. Der pH-Wert der dabei entstehenden Lösung liegt bei 2 bis 3. Hierdurch kommt nicht nur die gute steinlösende, sondern auch gleichzeitig die dispergierende Wirkung der durch PSI freigesetzten Polyasparaginsäure gegenüber schwerlöslichen Calciumsalzen bzw. anderen schwerlöslichen Stoffen zum Tragen. Die resultierende saure Lösung führt aufgrund ihrer Säurewirkung auch zur direkten Auflösung eventuell gebildeter Calciumcarbonat-Inkrustationen. Vor allem in harten Gebirgswässern mit erhöhtem pH-Wert und damit verschärfter Inkrustationsproblematik zeigt PSI günstigerweise eine erhöhte Löslichkeit. Zudem ist PSI wegen seiner langsamen Hydrolyse bei zugleich geringer Wasserlöslichkeit lange am Einsatzort wirksam und damit dem direkten Einsatz von Polyasparaginsäure deutlich überlegen (slow-release Effekt).

Fettsäureamid im Sinne der vorliegenden Erfindung ist N,N'-Bisstearoylethylendiamin (CAS-Nr. 00 110-30-5) welches als Pulver unter dem Markennamen LICOWAX C vertrieben wird, eingesetzt.

Die Menge an einzusetzenden Fettsäureamiden ist abhängig vom Gehalt des PSI in den Kompimaten. Der Gehalt an PSI in den Komprimaten liegt bei 50-95 Gew.-%, bevorzugt 60 bis 95 Gew.-%. Entsprechend liegt der Gehalt an Fettsäureamid bei 5 bis 50 Gew.-%, bevorzugt bei 5 bis 45 Gew.-% der Komprimate, wobei für eine wirksame Verhinderung der Calciumcarbonatbildung die oben angegebenen Konzentrationen an PSI im zu konditionierenden Wasser ausschlaggebend sind.

Gegebenenfalls können neben der Mischung aus PSI und Fettsäureamiden weitere Härtestabilisatoren im erfindungsgemäßen Konditionierungsmittel eingesetzt werden. Als zusätzliche Härtestabilisatoren können Verbindungen der Reihe anorganische kondensierte Phosphate, wie Alkali-di-, -tri- und -polyphosphate, organische Phosphorverbindungen oder Organophosphonsäuren, wie beispielsweise 2-Methyl-propanphosphonsäure, Hydroxyethylidendiphosphonsäure, Aminomethylenphosphonsäuren, N-haltige Phosphonate, Aminophosphonate, Aminoalkylenphosphonsäuren wie Aminotri(methylenphosphonsäure) oder Diethylentriamino-penta(methylen-phosphonsäure), Poly(aminomethylen-phosphonate), oder Hydroxyethyl-ethylen(di(amino-methylen)-phosphonsäure), ferner Phosphonocarbonsäuren, z.B. Phosphonobutan-tricarbonsäure, Phosphatester, Polyphosphorsäureester, Aminophosphate, Bernsteinsäureamid, Kohlehydrate, Polysaccharide, Glukonate, Polyglycoside, Polyglucoside und deren Derivate, Polyoxycarbonsäuren sowie deren Copolymere, oxidierte Kohlehydrate, wie oxidierte Zellulose, Stärke oder Dextrin, Proteine und andere Eiweißprodukte, wasserlösliche Polyaminosäuren, beispielsweise Polyasparaginsäure, Silikate, wie Alkalisilikate, Wasserglas oder Zeolithe eingesetzt werden.

Auch die wasserlöslichen Salze der aufgeführten Säuren sind als Härtestabilisatoren neben der PSI/Fettsäureamid-Mischung geeignet, bevorzugt die Natriumsalze.

In einer besonders bevorzugten Ausführungsform der vorliegenden Erfindung liegt PSI zusammen mit Polyasparaginsäure im Konditionierungsmittel vor. Da PSI unter geeigneten Bedingungen zu Polyaspartat hydrolysiert, selber jedoch eher als hydrophob anzusehen ist, erhält man eine Depotwirkung an Härtestabilisator in der erfindungsgemäßen Formulierung im Sinne einer "slow-release" Formulierung.

Als Dispergatoren für die erfindungsgemäßen Wasserkonditionierungsmittel sind unter anderem geeignet: Tanninderivate, wie sulfitierte Tannine, Ligninsulfonate, sulfonierte Kondensationsprodukte des Naphthalins mit Formaldehyd, anionische Polyelektrolyte, z.B. Polymerisate auf Acrylatbasis, wie Polyacrylate, Polymethacrylate, Polyacrylamide und Copolymere von Acrylsäure bzw. Methacrylsäure und Acrylamid, ferner P-haltige polymere Verbindungen, wie N-Phosphomethyl-makrocyclische Polyether oder phosphonomethylierte Oxyalkylenamine sowie Phosphinsäure-haltige Homo- und Copolymere von Acrylsäure und Acrylamid und oligomere Phosphinico-Bernsteinsäure-Verbindungen (wie sie in der US-A 4 088 678 beschrieben werden). Weiter sind geeignet Polymere mit N-substituierten Amidfunktionen, z.B. sulfomethylierte oder sulfoethylierte Polyacrylamide und Polymethacrylamide und Copolymere bzw. Terpolymere mit Acrylsäure und Maleinsäureester, N-Butylacrylamid und dessen Copolymere und Acrylamidopropionsulfonsäure als Salz und deren Copolymere, ferner phosphinoalkylierte Acrylamidpolymere und Copolymere mit Acrylsäure, Copolymere von Alkenen mit ungesättigten Dicarbonsäuren, und Polymere und Copolymere auf der Basis von Maleinsäure. Solche und ähnliche Verbindungen sind z.B. beschrieben in EP-A 225 596, EP-A 238 852, EP-A 238 853, EP-A 238 729, EP-A 265 846, EP-A 310 099, EP-A 314 083, EP-A 330 876 oder EP-A 517 470. Wasserlösliche Salze entsprechender Säuren sind ebenfalls geeignet.

Weiterhin können den erfindungsgemäßen Konditionierungsmitteln Sequestrierungsmittel zugegeben werden.

Als Komplexierungsmittel im Sinne der vorliegenden Erfindung eignen sich unter anderem Iminodisuccinat (IDS), Nitrilotriessigsäure, Zitronensäure, Ethylendiamintetraessigsäure (EDTA), Ethercarboxylate oder oxidierte Kohlehydrate, beispielsweise partiell hydrolysierte und oxidierte Stärke oder Dextrin. Weiterhin sind phosphorhaltige Komplexbildner wie z.B. kondensierte Phosphate und Phosphonate, geeignet, sofern diese nicht bereits in ihrer Funktion als Härtestabilisatoren bereits eingesetzt werden.

Den erfindungsgemäßen Wasserkonditionierungsmitteln können weitere Zusätze wie beispielsweise Aluminatverbindungen (siehe EP-A 0 302 522), Stabilisatoren, wie polyquaternäre Amine, z.B. Poly(dimethylamino-co-epichlorhydrin) oder Poly(diallyldimethyl-ammoniumchlorid) (wie sie in der US-A 5 038 861 beschrieben sind), oder geeignete Tenside, wie z.B. Alkyl-arylsulfonate, Polyvinylsulfonate, Natriummethoxymethylcellulose etc. zugegeben werden.

Im Bedarfsfall oder in außergewöhnlichen Situationen kann selbstverständlich zusätzlich zu den Säureamiden den erfindungsgemäßen Wasserkonditionierungsmitteln Biozide hinzugefügt werden. Prinzipiell sind dafür alle gemäß den nationalen Vorschriften zur Reinhaltung von Gewässern anzuwendenden Biozide geeignet. Als bevorzugte Biozide im Sinne der vorliegenden Erfindung werden Phthalimidoperoxohexansäure, Dibenzoperoxid, Chlor-bromdimethylhydantoin oder weitere organische Peroxide eingesetzt.

Die Anwendung der erfindungsgemäßen Wasserkonditionierungsmittel kann in üblicher Form wie beispielsweise Pulver oder Komprimaten wie Tabletten oder Depotsteinen erfolgen. Erfindungsgemäß bevorzugt ist der Einsatz von Komprimaten. Darüber hinaus sind aber auch weitere Anwendungsformen möglich, die die Depotwirkung (d.h. die allmählich und zeitlich konstant Wirkstoff freisetzende Wirkung) des PSI bzw. slow-release Eigenschaft unterstützen. Geeignet sind zum Beispiel der Einsatz in Form von wasserdurchlässigen oder selbstauflösenden Beuteln aus geeigneten synthetischen oder biologisch abbaubaren Substanzen, wie beispielsweise Polyesteramiden (z.B. dem BAK™ (Lanxess Deutschland GmbH)), wobei gemäß dem biologischen Abbau der Matrix (Polyesteramid) das PSI sich in Polyasparaginsäure umwandelt.

Das Verpressen des PSI mit den Fettsäureamiden zu den erfindungsgemäß bevorzugten Komprimaten wie beispielsweise Tabletten, Stangen, Blöcke, Depotsteinen oder andere Formkörper erfolgt gegebenenfalls mittels diverser Hilfsstoffe, wie Stangenpressmaschinen oder Tablettiermaschinen. Beispielhaft werden Depotsteine in der Schweizer Bauzeitung des SIA "Schweizer Ingenieur und Architekt", Nr. 12, 24. März 2000, dargestellt.

### Beispiele

### Beispiel 1 (nicht erfindungsgemäß)

In einer 2 1 Flasche wurden ca. 150 ml Dränagenwasser aus dem Schmittentunnel und ca 8 g CaCO₃ vorgelegt und auf 2000 ml mit Brunnenwasser aufgefüllt. Eine Polysuccinimid-Tablette mit 10% Stearinsäure als Bindemittel wurde hinzugegeben. Durchmischung und Sauerstoffeintrag erfolgte über eine Begasung mit Druckluft. Der pH-Wert schwankte zwischen 8,7 und 7,2. Nach Bedarf wurde CaCO₃ nachdosiert um den pH basisch zu halten.

Nach ca. 4-5 Tagen bedeckte sich die Tablette mit einem weissen Belag. Der Belag erwies sich als Biofilm, der mit Kalkseife und CaCO₃ verwachsen war.

### Beispiel 2 (nicht erfindungsgemäß)

Eine Tablette aus PSI und Stearinsäure, die in einem Kunststoffnetz eingeschlossen war, wurde in einem wässrigen CaCO₃-haltigen System untersucht. Zusätzlich wurde ein gehäufter Löffel Stearinsäure-Pulver dazugegeben. Es wurde beobachtet, dass die aus der Tablette stammenden Calcium-Stearate, die sich auf Grund der Begasung als feste Partikel im Reaktorvolumen verteilten, vollständig am Netz adsorbiert wurden. In einem weiteren Versuch wurde ein Netz gewählt, das relativ breitmaschig war. 24 Stunden lang wurde Wasser, das Stearinsäure enthielt, mit Luft begast. Die Stearinsäure schwamm an der Wasseroberfläche und zeigte keine Tendenz zur Adsorption am Netz. Nach der Zugabe von CaCO₃ und weiteren 24 Stunden setzte sich Calcium-Stearat vollständig am Netz ab.

Die Umhüllung des Polysuccinimid enthaltenden Komprimats mit Calciumstearat verhindert die Wirkstoffabgabe an das umgebende wässrige Medium.

### Beispiel 3 (erfindungsgemäß)

Es wurden Tabletten aus PSI und Licowax C als Bindemittel hergestellt mit der Zusammensetzung 90 Gew.-% Poysuccinimid (Baypure®) und 1 Gew.-% Sorbinsäure sowie 0,5 Gew.-% Propylparaben. Die Tablette wurde in einer alkalischen wäßrigen Lösung getestet, die folgendermassen beschaffen war:
In einem 500 ml Kolben wurden 100 ml Leitungswasser mit 2 g/l K₂HPO₄ vorgelegt, pro Kolben wurde 1 g CaCO3 dazugegeben. Angeimpft wurde mit Pilz K 15 und Bodenmikroorganismen.

Die Tablette mit Licowax C blieb über den gesamten Beobachtungszeitraum von drei Wochen frei von Bewuchs mit dem Pilz K15.

### Beispiel 4 (nicht erfindungsgemäß)

Es wurden Tabletten mit einem Triglycerid (Gycerintristearat) als Bindemittel hergestellt mit der Zusammensetzung 90 Gew.-% Polysuccinimid (Baypure) und 1 Gew.-% Sorbinsäure sowie 0,5 Gew.-% Propylparaben. Die Tabletten wurden in einer alkalischen wässrigen Lösung getestet, die folgendermaßen beschaffen war.

In einem 500 ml Kolben wurden 100 ml Leitungswasser mit 2 g/l K₂HPO₄ vorgelegt, pro Kolben wurde 1 g CaCO₃ dazugegeben. Angeimpft wurde mit Pilz K 15 und Bodenmikroorganismen.

Die Tablettenformulierung mit dem Triglycerid zeigte schon nach 72 h Exposition im Wasser eine eindeutige Biofilmbildung. Die Tablette war mit dem zur Beimpfung verwendeten Fadenpilz vollständig überwachsen. Offensichtlich war das Triglycerid ein so guter Nährstoff, dass selbst der Zusatz der Konservierungsmittel nicht ausreichte, um die Tabletten vor mikrobiellen Befall zu schützen.

## Patentansprüche

1. Wasserkonditionierungsmittel, **dadurch gekennzeichnet, dass** dieses als Komprimat vorliegt welches einen Gehalt an Polysuccinimid (PSI) von 50 bis 95 Gew.-% in Kombination mit N,N'-Bisstearoylethylendiamin aufweist.

2. Konditionierungsmittel gemäß Anspruch 1, **dadurch gekennzeichnet, dass** neben PSI Härtestabilisatoren der Reihe anorganische kondensierte Phosphate, Organophosphonsäuren, Phosphatester, Polyphosphorsäureester, Aminophosphate, Bernsteinsäureamid, Kohlehydrate, Polysaccharide, Glukonate, Polyglycoside, Polyglucoside und deren Derivate, Polyoxycarbonsäuren sowie deren Copolymere, oxidierte Kohlehydrate, Proteine, wasserlösliche Polyaminosäuren, Silikate oder Zeolithe eingesetzt werden.

3. Konditionierungsmittel gemäß Anspruch 1 oder 2, **dadurch gekennzeichnet, dass** Dispergatoren der Reihe Tanninderivate, Ligninsulfonate, sulfonierte Kondensationsprodukte des Naphthalins mit Formaldehyd, Polyacrylate, Polymethacrylate, Polyacrylamide, Polymerisate auf Acrylatbasis, P-haltige polymere Verbindungen, Phosphinsäure-haltige Homo- und Copolymere von Acrylsäure und Acrylamid, oligomere Phosphinico-Bernsteinsäure-Verbindungen, sulfomethylierte oder sulfoethylierte Polyacrylamide und Copolymere bzw. Terpolymere mit Acrylsäure und Maleinsäureester, N-Butylaclylamid und dessen Copolymere, Acrylamidopropionsulfonsäure als Salz und deren Copolymere, Maleinsäure- oder Maleinsäureanhydrid-Polymere und Copolymere, phosphinoalkylierte Acrylamidpolymere und Copolymere mit Acrylsäure, Copolymere von Alkenen mit ungesättigten Dicarbonsäuren eingesetzt werden.

4. Konditionierungsmittel gemäß einem der Ansprüche 1 bis 3, **dadurch gekennzeichnet, dass** Komplexbildner der Reihe Iminodisuccinat, Nitrilotriessigsäure, Zitronensäure, EDTA, Ethercarboxylate, oxidierte Kohlehydrate oder phosphorhaltige Verbindungen eingesetzt werden.

5. Verfahren zur Verhinderung von Ablagerungen in und an Wassersystemen, **dadurch gekennzeichnet, dass** dem Wasser oder dem abzuführenden Grund-, Sicker- oder Fließwasser ein Konditionierungsmittel gemäß einem der Ansprüche 1 bis 4 zugegeben wird.

6. Verfahren gemäß Anspruch 5, **dadurch gekennzeichnet, dass** so viel Konditionierungsmittel zugegeben wird, dass der Gehalt an PSI im zu konditionierenden Wassersystemen bei 0,1 bis 10000 g/m³ Wasser liegt.

7. Verfahren gemäß Anspruch 5, **dadurch gekennzeichnet, dass** das zu konditionierende Wassersystem in der Tunnelentwässerung auftritt.

## Claims

1. Water-conditioning agent, **characterized in that** said agent is in the form of a compact which has a content of polysuccinimide (PSI) of 50 to 95% by weight in combination with N,N'-bisstearoylethylenediamine.

2. Conditioning agent according to Claim 1, **characterized in that**, in addition to PSI, use is made of hardness stabilizers of the series inorganic condensed phosphates, organophosphonic acids, phosphate esters, polyphosphoric esters, aminophosphates, succinamide, carbohydrates, polysaccharides, gluconates, polyglycosides, polyglucosides and their derivatives, polyoxycarboxylic acids and also their copolymers, oxidized carbohydrates, proteins, water-soluble polyamino acids, silicates or zeolites.

3. Conditioning agent according to Claim 1 or 2, **characterized in that** use is made of dispersants of the series tannin derivatives, lignosulfonates, sulfonated condensation products of naphthalene with formaldehyde, polyacrylates, polymethacrylates, polyacrylamides, polymers based on acrylate, P-containing polymeric compounds, phosphinic acid-containing homo- and copolymers of acrylic acid and acrylamide, oligomeric phosphinico-succinic acid compounds, sulfomethylated or sulfoethylated polyacrylamides and copolymers and terpolymers with acrylic acid and maleic esters, N-butylacrylamide and its copolymers, acrylamidopropionosul fonic acid as salt and its copolymers, maleic acid or maleic anhydride polymers and copolymers, phosphinoalkylated acrylamide polymers and copolymers with acrylic acid, copolymers of alkenes with unsaturated dicarboxylic acids.

4. Conditioning agent according to one of Claims 1 to 3, **characterized in that** use is made of complexing agents of the series iminodisuccinate, nitrilotriacetic acid, citric acid, EDTA, ether carboxylates, oxidized carbohydrates, or phosphorus-containing compounds.

5. Method for preventing deposits in and at water systems, **characterized in that** a conditioning agent according to one of Claims 1 to 4 is added to the water or to the ground water, leachate water or flowing water to be removed.

6. Method according to Claim 5, **characterized in that** so much conditioning agent is added that the content of PSI in the water systems to be conditioned is 0.1 to 10 000 g/m³ of water.

7. Method according to Claim 5, **characterized in that** the water system to be conditioned occurs in tunnel drainage.

## Revendications

1. Agent de conditionnement de l'eau, **caractérisé en ce que** celui-ci se présente sous la forme d'un comprimé qui présente une teneur en polysuccinimide (PSI) de 50 à 95 % en poids en combinaison avec de la N,N'-bisstéaroyléthylène-diamine.

2. Agent de conditionnement selon la revendication 1, **caractérisé en ce qu'**outre le PSI, des stabilisateurs de dureté de la série constituée par les phosphates condensés inorganiques, les acides organophosphoniques, les esters de phosphate, les esters de l'acide polyphosphorique, les aminophosphates, les amides de l'acide succinique, les hydrates de carbone, les polysaccharides, les gluconates, les polyglycosides, les polyglucosides et leurs dérivés, les acides polyoxycarboxyliques et leurs copolymères, les hydrates de carbone oxydés, les protéines, les acides polyaminés solubles dans l'eau, les silicates ou les zéolithes sont utilisés.

3. Agent de conditionnement selon la revendication 1 ou 2, **caractérisé en ce que** des dispersants de la série constituée par les dérivés de tanin, les sulfonates de lignine, les produits de condensation sulfonés de naphtaline avec du formaldéhyde, les polyacrylates, les polyméthacrylates, les polyacrylamides, les polymères à base d'acrylate, les composés polymères contenant P, les homo- et copolymères d'acide acrylique et d'acrylamide contenant de l'acide phosphinique, les composés d'acide phosphinico-succinique oligomères, les polyacrylamides sulfométhylés ou sulfoéthylés et les copolymères ou terpolymères avec de l'acide acrylique et des esters de l'acide maléique, le N-butylacrylamide et ses copolymères, l'acide acrylamidopropiosulfonique en tant que sel et ses copolymères, les polymères et copolymères de l'acide maléique ou de l'anhydride de l'acide maléique, les polymères d'acrylamide phosphinoalkylés et les copolymères avec de l'acide acrylique, les copolymères d'alcènes avec des acides dicarboxyliques insaturés sont utilisés.

4. Agent de conditionnement selon l'une quelconque des revendications 1 à 3, **caractérisé en ce que** des complexants de la série constituée par l'iminodisuccinate, l'acide nitrilotriacétique, l'acide citrique, l'EDTA, les carboxylates d'éthers, les hydrates de carbone oxydés ou les composés contenant du phosphore sont utilisés.

5. Procédé d'inhibition de dépôts dans et sur des systèmes d'eau, **caractérisé en ce qu'**un agent de conditionnement selon l'une quelconque des revendications 1 à 4 est ajouté à l'eau ou à l'eau souterraine, d'infiltration ou courante à évacuer.

6. Procédé selon la revendication 5, **caractérisé en ce qu'**une quantité d'agent de conditionnement telle que la teneur en PSI dans le système d'eau à conditionner soit de 0,1 à 10 000 g/m³ d'eau est ajoutée.

7. Procédé selon la revendication 5, **caractérisé en ce que** le système d'eau à conditionner apparaît lors du drainage de tunnels.
